Europäisches Patentamt

European Patent Office

Office européen des brevets

(19)

(11) Publication number: **0 448 995 A1**

## EUROPEAN PATENT APPLICATION

(21) Application number: **91103374.4**

(22) Date of filing: **06.03.91**

(51) Int. Cl.⁵: **C08J 3/12**, //C08L27:18

(30) Priority: **08.03.90 JP 59296/90**

(43) Date of publication of application:
**02.10.91 Bulletin 91/40**

(84) Designated Contracting States:
**DE FR GB NL**

(71) Applicant: **DAIKIN INDUSTRIES, LIMITED**
**Umeda Center Building 4-12 Nakazaki-nishi**
**2-chome Kita-ku**
**Osaka 530(JP)**

(72) Inventor: **Sueyoshi, Tatsuo, c/o Yodogawa**
**Seisakusho**
**Daikin Ind. Ltd., 1-1, Nishi-Hitotsuya**
**Settu-shi, Osaka-fu(JP)**
Inventor: **Tanigawa, Singo, c/o Kashima Kojo**
**Daikin Ind. Ltd., 21, Oaza Sunayama**
**Hasaki-cho, Kashima-gun, Ibaraki-ken(JP)**
Inventor: **Nakashima, Toshio, c/o Kashima**
**Kojo**
**Daikin Ind. Ltd., 21, Oaza Sunayama**
**Hasaki-cho, Kashima-gun, Ibaraki-ken(JP)**

(74) Representative: **Türk, Gille, Hrabal**
**Brucknerstrasse 20**
**W-4000 Düsseldorf 13(DE)**

(54) Process for preparing polytetrafluoroethylene granular powder.

(57) A process for preparing a polytetrafluoroethylene granular powder which comprises agitating primary particles of a finely divided polytetrafluoroethylene ponder having an average particle size of not more than 600 μm in an aqueous medium containing no organic liquid to form agglomerates while crushing the agglomerates in an apparatus having an agitating mechanism of the aqueous medium and a crushing mechanism of the agglomerates within a temperature range of 60° to 100°C. According to the present invention, the polytetrafluoroethylene granular powder having the very excellent powder flowability can be obtained without using the organic liquid which is expensive and whose use is restricted.

EP 0 448 995 A1

The present invention relates to a process for preparing polytetrafluoroethylene granular powder, more particularly to a process for preparing a polytetrafluoroethylene granular powder having an extremery excellent powder flowability, which is suitable to be supplied to a molding apparatus by using an automatic feeder.

Polytetrafluoroethylene powder which is prepared by polymerizing tetrafluoroethylene in an aqueous medium in the substantially absence of an emulsifier is molded by comprision molding which is similar to methods adopted in a field of powder metallurgy, differing from molding methods to which other thermoplastic resins are applied such as melt-molding, melt injection molding and hot compression molding. Therefore, the polytetrafluoroethylene granular powder for molding is required to have some specific properties. As the fundamental properties, it is required to have excellent flowability, to be soft and to be pressed by a comparative low pressure to form a dense preformed article, and to have a large bulk density. Particularly, when the powder is molded by using an automatic molding apparatus, it is required that the powder is filled uniformly and easily in a mold, so it is essential to have an excellent powder flowability.

As a process for preparing a polytetrafluoroethylene granular powder satisfying the above-mentioned requirements, there has hitherto been known a process wherein the polytetrafluoroethylene powder is agitated in an aqueous medium containing an organic liquid to granulate (Japanese Examined Patent Publication No. 44-22619).

Further, the above-mentioned process has been improved, and Japanese Examined Patent Publication No. 57-15128 has proposed a process for preparing a polytetrafluoroethylene granular powder having a uniformer particle size distribution and having better flowability and the process has been widely carried out. Japanese Examined Patent Publication No. 57-15128 discloses a process for agglomerating a polytetrafluoroethylene powder by agitating the same in an aqueous medium containing an organic liquid having a surface tention of not more than 35 dynes/cm wherein the agitation is carried out while the crushing of the aggromerates is conducted by using an apparatus provided with an agitating mechanism and a crushing mechanism.

According to the above-mentioned process, however, it is necessarily required that the organic liquid having the surface tention of not more than 35 dynes/cm is used in an amount of 20 to 300 % by weight based on the polytetrafluoroethylene primary particles, for improving the powder flowability. Such an organic liquid is expensive, so it is desirable that the liquid is not used if possible. Also, it tends to restrict the use of widely used flon organic liquids such as trichlorotrifluoroethane all over the world, because it is said that the flon organic liquid destroys the ozon layer.

An object of the present invention is to provide a process for preparing a polytetrafluoroethylene granular powder having an excellent powder flowability without using any of the organic liquids as mentioned above.

This and other objects of the present invention will become apparent from the description hereinafter.

In accordance with the present invention, there is provided a process for preparing a polytetrafluoroethylene granular powder which comprises agitating primary particles of a finely divided polytetrafluoroethylene powder having an average particle size of not more than 600 $\mu$m in an aqueous medium containing no organic liquid to form agglomerates while crushing the agglomerates within a temperature range of 60° to 100°C in an apparatus having an agitating mechanism of the aqueous medium and a crushing mechanism of the agglomerates.

Figs. 1 and 2 are schematic front views showing apparatuses empolyed in the process of the present invention;

Fig. 3 is a schematic side view showing an apparatus for measuring the powder flowability;

Figs. 4A to 4D are schematic views illustrating the compression molding applied to Test Example; and

Fig. 5 is a graph showing a change of a weight of preformed article obtained in each molding cycle of Test Example.

In the present invention, the primary particles, namely the finely divided particles of polytetrafluoroethylene suitably used as the starting material has an average particle size of not more than 600 $\mu$m, preferably not more than 50 $\mu$m. When the primary particles having the average particle size of not more than 50 $\mu$m, the granular powder having excellent electric properties can be obtained. The primary particles of polytetrafluoroethylene is prepared by grinding a polymer powder which is obtained by polymerizing tetrafluoroethylene monomer in the presence of water containing a polymerization initiator, in the presence or absence of water by means of a grinder such as a hammer mill, a grinder equipped with a vaned rotor, a grinder of high energy fluid type or an impact grinder. Either a fibrous powder or a non-fibrous powder may be employed without any trouble.

As the aqueous medium, water is usually used. It is not always necessary to employ water purified in high purity. However, in case of employing water containing an inorganic or organic impurities, these impurities remain in the obtained polytetrafluoroethylene granular powder and, as a result, an article obtained from the granular powder is unfavorably made to color and the breakdown voltage is made to lower. Therefore, these impurities resulting in such disadvantages must be previously removed out of the aqueous medium.

The aqueous medium is suitably employed in the ratio of 150 to 5000 % by weight to the primary particles of finely divided polytetrafluoroethylene, and the obtained slurry containing the primary particles is agitated to form agglomerates. An amount capable of giving the flowability to the slurry containing the polytetrafluoroethylene primary particles suffices for the used amount of the aqueous medium. The use of much amount of aqueous medium than the above-mentioned range brings to the economically disadvantage and on the other hand the lack of the aqueous medium makes the procedures in agglomerating and in crushing difficult. So long as the slurry containing the polytetrafluoroethylene powder and the aqueous medium has a flowability, there is no problem in increase and decrease of the aqueous medium to some extent.

According to the process of the present invention, the agitating mechanism of the polytetrafluoroethylene powder in the aqueous medium and the crushing mechanism of the agglomelates are operated simultaneously. That is, the crushing is conducted at the same time as or after the agitation. Under such conditions, the agitation and the crushing are conducted within a temperature range of $60^\circ$ to $100^\circ$ C. The temperature condition is very important. When the temperature is less than $60^\circ$ C, there cannot be obtained the polytetrafluoroethylene granular powder having the extremely excellent powder flowability desired in the present invention. On the other hand, when the temperature is more than $100^\circ$ C, though the electric properties of the obtained granular powder are not impaired, the working under such a temperature range is not preferable from the viewpoint of the apparatus and the operation. Preferable temperature range is from $70^\circ$ to $100^\circ$ C. In general, the agitation and crushing can be conducted within the above-mentioned temperature range by maintaining the temperature of the aqueous medium to such a range (from $60^\circ$ C to $100^\circ$ C). When the agglomeration is conducted under the above-mentioned conditions, there can be obtained the polytetrafluoroethylene granular powder having the desired particle size, having the uniform particle size distribution, being dense and having the excellent electric properties.

The term "crushing mechanism" used herein means a mechanism capable of lowering a particle size of a secondary agglomerate composed of primary particles by partially crushing an agglomerated powder having an improper large particle size or an abnormally large aggregate.

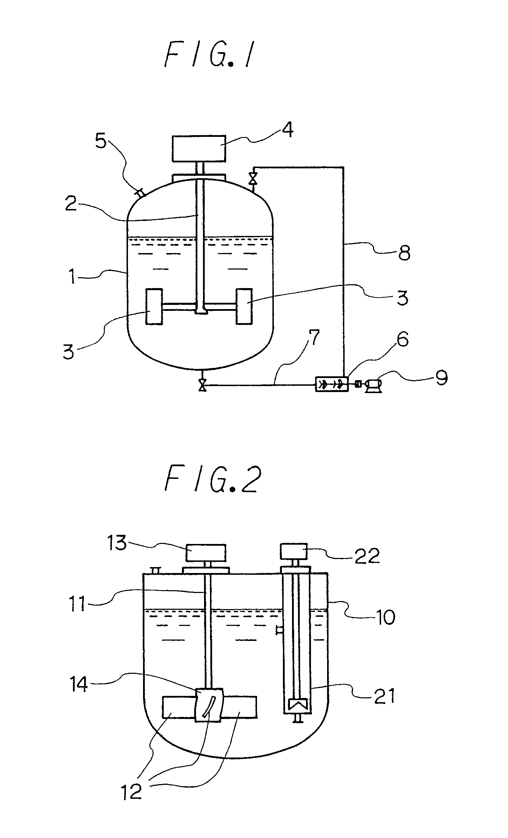

An apparatus employed in the instant process is explained by using figures. That is, each of Fig. 1 and Fig. 2 is the schematic front view of the apparatus. In Fig. 1, the numeral 1 is the agitating vessel, and in the agitating vessel 1 the rotor 2 is centered vertically. At the under end of the rotor 2 the agitating vane 3 is equipped radially, and the upper end of the rotor 2 is connected with the motor 4. The numeral 5 is the providing port for the aqueous medium, the numeral 6 is the crusher, and the numeral 9 is the motor. The crusher 6 is connected with the under region and the upper region of the agitating vessel 1 through the transfer pipes 7 and 8, respectively. As the crusher 6, there can be employed one making a crushing of the polytetrafluoroethylene particles included in the aqueous medium possible by means of rotating a cutter of turbine blade type in a cylinder with transferring the aqueous medium. Examples of such an apparatus are Pipe-line homomixer (trademark) (commercially available from Tokushukika Kogyo Kabushiki Kaisha) and Disintergrator (trademark) (commercially available from Komatsu Mfg. Co., Ltd.) which are equipped with a cutter and a stator being able to provide cutting and impact.

The aqueous medium including the primary particles of polytetrafluoroethylene is introduced in the agitating vessel 1 through the providing port 5, and then agitated by means of the agitating vane 3. At the same time as the agitation or after agitation, the aqueous medium is introduced to the crusher 6 through the transfer pipe 7. By passing through the crusher 6, agglomerates too large are crushed and the aqueous medium including the particles is returned to the agitating vessel 1 through the transfer pipe 8. Thus, an agglomerated powder having a uniform particle size can be obtained by carrying out the agglomeration by agitation in the agitating vessel 1 and the crushing of the largely agglomerated powder or the abnormally large aggregate in the crusher 6 at the same time or in order, or alternately.

Fig. 2 is the schematic front view showing another apparatus which can be employed in the present invention. In Fig. 2, the crusher 21 is set in parallel with the rotor 11 equipped with the agitating vane 12 in the agitating vessel 10. The numerals 13 and 22 are the motors for the rotor 11 and the crusher 21, respectively. The agitating vane 12 is radiately and spirally fixed on the boss 14 at the under end of the rotor 11. Therefore, in this case, the polytetrafluoroethylene particles included in the aqueous medium is agglomerated while the aqueous medium is agitated by the agitating vane 12 and the resultant agglomerated powder and aggregate are crushed by the crusher 21.

According to the present invention, it is preferable that the agitating vessel for agglomeration is charged with the primary particles of the finely divided polytetrafluoroethylene and water, and then the mixture is agitated while crushing. If circumstances require, the primary particles of polytetrafluoroethylene previously wetted by a small amount of water can be admixed with the residual aqueous medium in the agitating vessel and then agitated. Also the primary particles of polytetrafluoroethylene can be introduced in an agitating vessel previously charged with the aqueous medium and then agitated.

According to the present invention, the primary particles of polytetrafluoroethylene are agglomerated by the effect of agitation, and even if the granular powder having a particle size of more than 5000 $\mu$m is produced, such a large granular powder is crushed by utilizing a crusher at the same time as agitation or after agitation, or alternately with agitation, as stated above, to give a uniform granular powder of at most 600 $\mu$m in particle size.

Thus obtained polytetrafluoroethylene granular powder by the process of the present invention has the following properties.

Average particle size: 300 to 600 $\mu$m

Bulk density: not less than 0.5 g/m$\ell$

Powder flowability: not less than 8.0

An average particle size of the polytetrafluoroethylene granular powder is determined by a usual manner for measurement as follows: Standard sieves of 10, 20, 32, 48 and 60 mesh ("mesh" in the specification means "inch mesh") are superposed in order from the top, and the powder is placed in the 10 mesh sieve. The sieves are shaken to make the fine powder fall in order through them, and the ratios of the powder remained on each sieve are calculated by percentage by weight. On a log probability paper, thus obtained cumulative weight percentage figures are plotted on axis of ordinate against sieve-opening size on axis of abscissa, and these points are connected by a straight line. An average particle size is the value corresponding to cumulative percentages of 50.

The powder flowability of polytetrafluoroethylene granular powder is determined as follows:

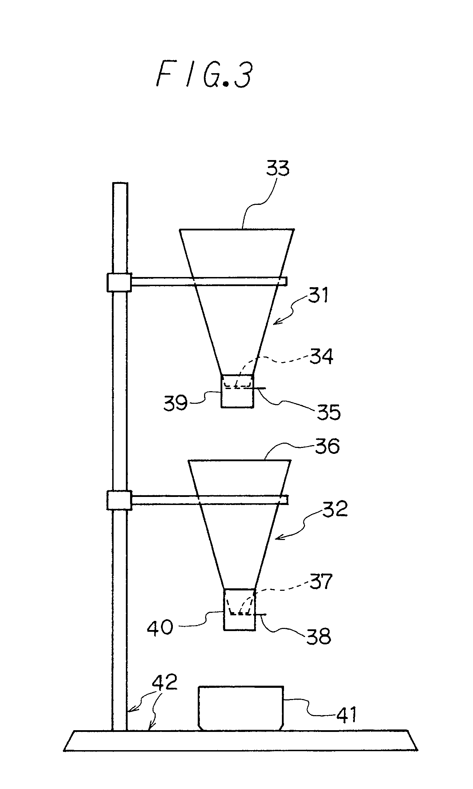

As a measuring apparatus, as shown in Fig. 3, an upper hopper 31 and an under hopper 32 which are fixed with a supporter 42 to accord their center-line are employed. The upper hopper 31 has an entrance 33 of 74 mm in diameter and an exit 34 of 12 mm in diameter, and a height from the entrance 33 to the exit 34 is 123 mm. A bottom plate 35 is provided at the exit 34 to make the powder remain or fall. The under hopper 32 has an entrance 36 of 76 mm in diameter and an exit 37 of 12 mm in diameter, and a height from the entrance 36 to the exit 37 is 120 mm. Also at the exit 37, a bottom plate 38 is provided. A distance between the upper hopper 31 and the under hopper 32 is adjusted to keep a distance between both the bottom plates into 15 cm. Further, the exits 34 and 37 are covered with the covers 39 and 40, respectively, and the numeral 11 is the accepting vessel for the powder.

After allowing 200 g of the powder to be measured to stand for more than 4 hours in a room adjusted at a temperature of 23.5° to 24.5°C and sieving the powder with 10 mesh sieve corresponding to a sieve opening of 1680 $\mu$m, the measurement of the powder flowability is carried out at the same temperature as follows:

(1) At first, the powder full-filled in a 30 ml cup is placed in the upper hopper 31, and, immediately after, the bottom plate 35 is pulled out to make the powder fall. When the powder does not fall, it is made to fall by poking with a wire. After allowing the powder to stand for 15 ± 2 seconds from when the powder is completely fallen into the under hopper 32, the bottom plate 38 is pulled out and it is observed whether the powder flows out of the exit 37 or not. In case the powder flows down within 8 seconds completely, the powder is judged as to have fallen.

(2) The same measurement is repeated 3 times to observe whether the powder falls or not. In case the powder flows down two or three times in 3 measurements, the flowability is judged as "good". In case the powder never falls, the flowability is judged as "bad". In case the powder flows down once in 3 measurements, the same measurement is further repeated 2 times. In case the powder flows down every 2 times, the flowability is eventually judged as "good", and in case of other than the above case, the flowability is judged as "bad".

(3) The powder judged as "good" in accordance with the above measurement is subsequently subjected to the same measurement as in the above-mentioned except that two 30 ml cups in which the powder is full-filled are employed. In case the flowability is judged as "good", the powder subjected to the measurement is increased in order with every one cup at most to 8 cups till when the flowability becomes "bad". In each measurement, the powder flown out of the under hopper may be employed again for measurement.

(4) In the above measurement, the more the amount of the powder, that is, the more the cup's number, the less the powder falls down. In view of this point, the value obtained by subtracting 1 from the cup's number when the flowability becomes "bad" is defined as "powder flowability".

A bulk density of the polytetrafluoroethylene granular powder is determined according to Japanese Industrial Standards (JIS) K 6891.

A breakdown voltage of the polytetrafluoroethylene granular powder is determined according to JIS K 6891.

The present invention is more specifically described and explained by means of the following Examples and Comparative Examples, in which all % and parts are by weight unless otherwise noted. It is to be understood that the present invention is not limited to the Examples, and various changes and modifications may be made in the invention without departing from the spirit and scope thereof.

Example 1

A finely divided polytetrafluoroethylene was agglomerated by employing an apparatus as shown in Fig. 1.

A tank having an inner diameter of 1500 mm and a height of 2000 mm, which was equipped with an arrow-shaped agitating vane (as employed in turbine) having a maximum diameter of 600 mm and connected with Pipeline homomixer (a crusher commercially available from Tokushukika Kogyo Kabushiki Kaisha), was charged with 1000 liters of warm water having a temperature of 90°C and 500 kg of primary particles of finely divided polytetrafluoroethylene having an average particle size of 420 $\mu$m (whose particle size distribution is shown in Table 1), a bulk density of 0.31 g/m$\ell$ and a powder flowability of 0. The vane was rotated at a speed of 98 r.p.m., while maintaining the inner temperature of the tank at 90°C, and at the same time, the slurry in the tank was circulated through the crusher at the ratio of 500 liters/minute. This operation was continued for 10 minutes. For further 3 minutes, the agitation was continued. Then, the polytetrafluoroethylene powder was separated from water and dried to give a polytetrafluoroethylene granular powder having a uniform particle size distribution as shown in Table 1.

An average particle size was calculated from a log probability paper on which the results of the particle size distribution as shown in Table 1 were plotted, and it was confirmed that the granular powder had an average particle size of 481 $\mu$m. Also, the granular powder had a powder flowability of 8.

Other properties of the granular powder are shown in Table 2 together with the properties of the primary particles.

Example 2

The same procedure as in Example 1 was repeated except that primary particles of polytetrafluoroethylene having an average particle size of 30 $\mu$m, a bulk density of 0.29 g/m$\ell$ and a powder flowability of 0 were used. The treated polytetrafluoroethylene granular powder was separated from water and dried.

The obtained polytetrafluoroethylene granular powder had a particle size distribution as shown in Table 1.

The obtained granular powder had an average particle size calculated from the particle size distribution shown in Table 1 of 578 $\mu$m, and a powder flowability of 8. The properties of the granular powder are shown in Table 2 together with those of the primary particles.

Example 3

The same procedure as in Example 1 was repeated except that the inner temperature of the tank was 70°C. The treated polytetrafluoroethylene powder was separated from water and dried.

The obtained polytetrafluoroethylene granular powder had a particle size distribution as shown in Table 1.

The obtained granular powder had an average particle size calculated from the particle size distribution shown in Table 1 of 427 $\mu$m, and a powder flowability of 8. The properties of the granular powder are shown in Table 2 together with those of the primary particles.

Comparative Example 1

The same procedure as in Example 1 was repeated except that Pipeline homomixer was not used.

The obtained polytetrafluoroethylene granular powder had many large particles and a particle size distribution as shown in Table 1.

Also, it was difficult to form into a molded article from the obtained granular powder and the surface of the molded article was very uneven so if it was desired to use the article, the cutting was required.

The obtained granular powder had an average particle size calculated from the particle size distribution as shown in Table 1 of 1270 $\mu$m and a powder flowability of 0. The properties of the granular powder are shown in Table 2 together with those of the primary particles.

Comparative Example 2

The same procedure as in Example 2 was repeated except that the agitation and crushing were conducted at a temperature of 40°C. The treated polytetrafluoroethylene powder was separated from water and dried.

The obtained polytetrafluoroethylene granular powder had a particle size distribution as shown in Table 1

The obtained granular powder had an average particle size calculated from the particle size distribution as shown in Table 1 of 331 $\mu$m, and a powder flowability of 0. The properties of the granular powder are shown in Table 2 together with those of the primary particles.

Comparative Example 3

A tank having an inner diameter of 1500 mm and a height of 2000 mm, which was equipped with a two-arrow-shaped agitating vane (as employed in propeller) was charged with 1000 liters of pure water having a temperature of 30°C, to which 500 kg of primary particles of finely divided polytetrafluoroethylene having an average particle size of 30 $\mu$m and a bulk density of 0.29 g/m$\ell$, and 250 liters of trichlorotrifluoroethane were added. The vane was rotated at a speed of 400 r.p.m. for 10 minutes, while maintaining the inner temperature of the tank at 30°C. Then, the polytetrafluoroethylene powder was separated from water and dried to give a polytetrafluoroethylene granular powder having properties as shown in Table 2.

EP 0 448 995 A1

Table 1

| | | Particle size | | | | | |
|---|---|---|---|---|---|---|---|
| | Sieve size (mesh) | 10 | 20 | 32 | 48 | 60 | pass 60 |
| | Sieve openings (µm) | 1651 | 833 | 495 | 295 | 246 | 246 |
| Ex.1 | Proportions in the primary particles (%) | 0.1 | 2.9 | 23.0 | 53.6 | 12.0 | 8.5 |
| | Proportions in the granules (%) | 0.1 | 4.6 | 36.4 | 49.5 | 6.8 | 2.8 |
| Ex.2 | Proportions in the granules (%) | 1.6 | 20.5 | 30.8 | 38.9 | 6.0 | 2.2 |
| Ex.3 | " | 0.1 | 2.3 | 29.5 | 46.5 | 16.5 | 5.1 |
| Com.Ex.1 | " | 47.4 | 12.7 | 10.6 | 18.1 | 2.5 | 10 |
| Com.Ex.2 | " | 1.5 | 3.8 | 15.6 | 37.9 | 15.2 | 2.6 |

Table 2

| Polytetra-fluoroethylene | | Average particle size (μm) | Powder flowability | Bulk density (g/mℓ) | Breakdown voltage (KV) |
|---|---|---|---|---|---|
| Ex.1 | Primary particles | 420 | 0 | 0.31 | 1.5 |
| | Granules | 481 | 8 | 0.52 | 1.5 |
| Ex.2 | Primary particles | 30 | 0 | 0.29 | 14 |
| | Granules | 578 | 8 | 0.75 | 4.5 |
| Ex.3 | Primary particles | 420 | 0 | 0.31 | 1.5 |
| | Granules | 427 | 8 | 0.50 | 2.0 |
| Com.Ex.1 | Primary particles | 420 | 0 | 0.31 | 1.5 |
| | Granules | 1270 | 0 | 0.50 | 1.5 |
| Com.Ex.2 | Primary particles | 30 | 0 | 0.29 | 14 |
| | Granules | 331 | 0 | 0.52 | 9.5 |
| Com.Ex.3 | Primary particles | 30 | 0 | 0.29 | 14 |
| | Granules | 600 | 3 | 0.70 | 7 |

Test Example

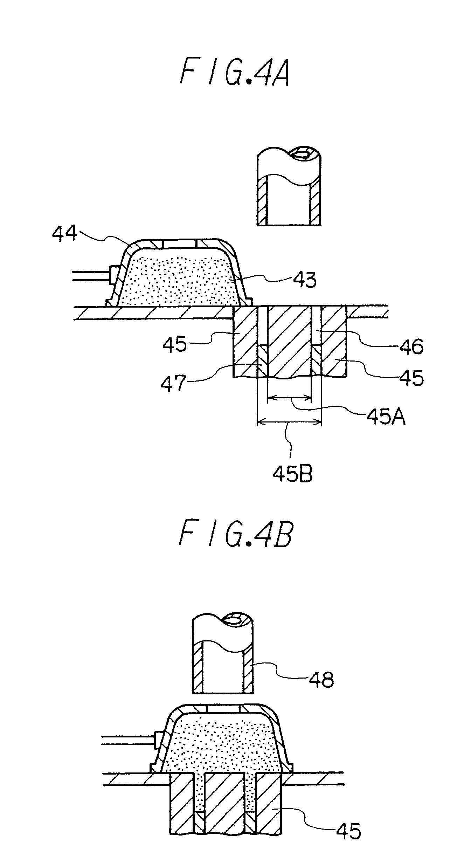

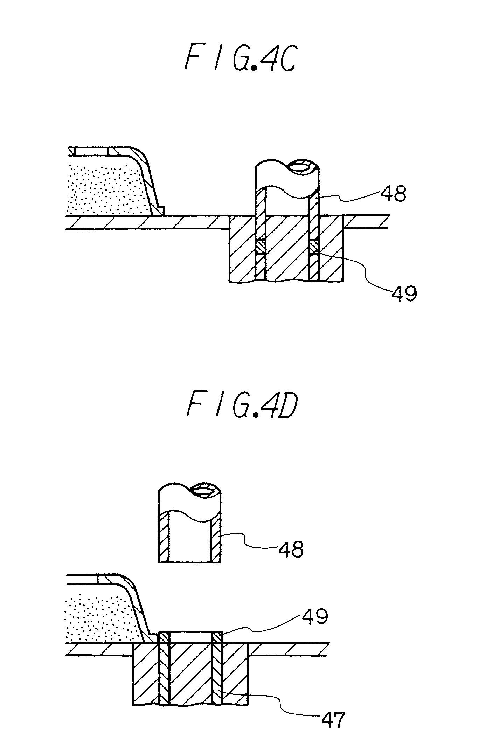

In order to confirm the powder flowability and the retention of powder flowability of each of the polytetrafluoroethylene granular powders obtained in Examples 1 and Comparative Example 3, the following

8

automatic molding test was conducted in the order of Fig. 4A, Fig. 4B, Fig. 4C and Fig. 4D.

A shuttle box 44 is charged with 500 g of the polytetrafluoroethylene granular powder to be tested 43, as shown in Fig. 4A. The shuttle box 44 is transfered on the mold 45, and it is vibrated 5 times in the direction of transfer on the mold 45 (Fig. 4B), whereby the granular powder is filled in the cylindrical convex portion 46 of the mold 45. The cylindrical mold 45 has a diameter (45A) of 58 mm, an outer diameter (45B) of 64 mm and a depth of 24 mm, and the bottom is the top face of the under ram 47 capable of moving up and down. Then, the shuttle box 44 returns to the original possition, and immediately the cylindrical upper ram 48 moves downward to compress the powder filled in the mold, as shown in Table 4C. After the compression, as shown in Fig. 4C, the under ram 47 moves upward until its top face reaches to the same height as the top face of the mold to push up the preformed article by the compression molding at the same time the upper ram 48 moves upward to return to the original position. At this time, the under ram 47 moves downward to form the convex portion at the same time the shuttle box transfers on the mold again together with the power 43 to exclude the preformed article 49 from the mold. The procedure (one-cycle) in the order of Fig. 4A, Fig. 4B, Fig. 4C and Fig. 4D is repeated. The above-mentioned filling-compression (one-cycle) is repeated until the powder cannot be not full-filled (the powder is not filled till the top face of the convenx portion) and until there is a space in the convex portion after filling.

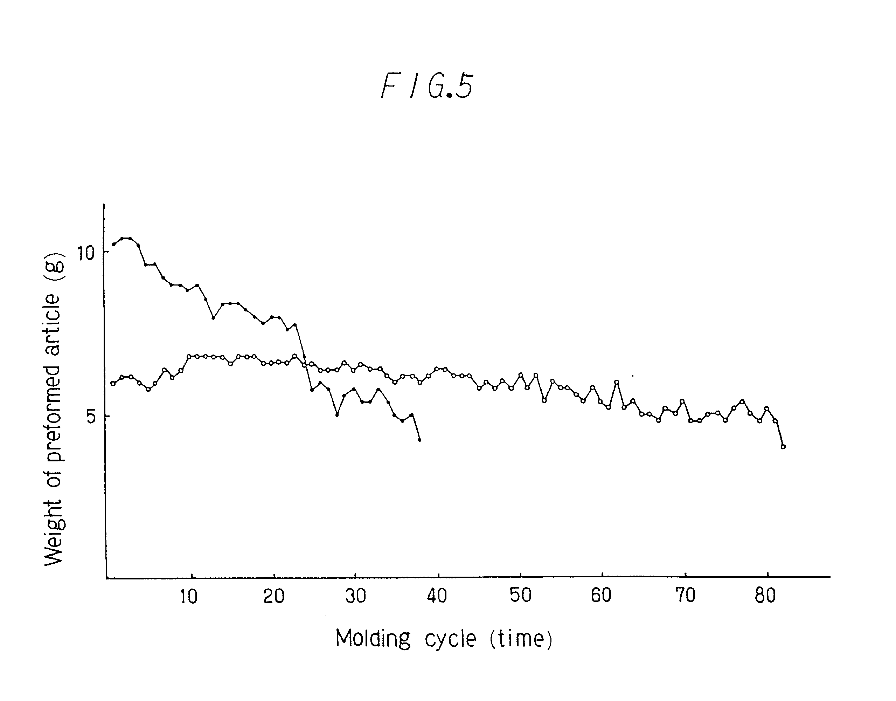

The weight of each preformed article 49 obtained according to the above-mentioned procedures varies depending on the bulk density of the granular powder and whether the granular powder is sufficiently uniformly filled in the convex portion of the mold or not. The article preformed obtained in each molding cycle is weighed. Fig. 5 is a graph on which the weights (g) are plotted on axis of ordinate against the molding cycle (times) on axis of abscissa.

As shown in Fig. 5, when using the granular powder obtained in Example 1 (shown as

○——○

in Fig. 5), the same weight of the powder could be automatically filled in the mold in from the first cycle to the 81-th cycle and almost all of the obtained preformed articles had the same uniformity. On the other hand, when using the granular powder obtained in Comparative Example 3, (shown as

●——●

in Fig. 5) since it was higher in bulk density than that obtained in Example 1, though the weight of the preformed article was high at first, it was suddenly lowered and the powder could not be full-filled at the 38-th cycle to finish the molding.

Also, when using the powder obtained in Example 1, only a very slight amount of the powder remained. On the other hand, when using the powder obtained in Comparative Example 3, the almost half of 500 g of the powder remained.

The preparation process of the present invention can provide the polytetrafluoroethylene granular powder having the extremery excellent powder flowability, without using the organic liquid which is expensive and whose use is restricted.

In addition to the ingredients used in the Examples, other ingredients can be used in the Examples as set forth in the specification to obtain substantially the same results.

## Claims

1. A process for preparing a polytetrafluoroethylene granular powder which comprises agitating primary particles of a finely divided polytetrafluoroethylene powder having an average particle size of not more than 600 $\mu$m in an aqueous medium containing no organic liquid to form agglomerates while crushing the agglomerates in an apparatus having an agitating mechanism of the aqueous medium and a crushing mechanism of the agglomerates within a temperature range of 60° to 100° C.

# F I G. 1

# F I G. 2

## F I G.3

# F I G. 4A

# F I G. 4B

# F I G.4C

# F I G.4D

# FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-4 123 606 (S.C. MALHOTRA)<br>* Column 1, lines 19-20; column 1, lines 39-47; column 3, lines 6-20; column 4, lines 5-29; column 4, line 40 - column 5, line 29; examples 1A-1E; claims 1,2 *<br>— — — | 1 | C 08 J 3/12 //<br>C 08 L 27:18 |
| A | GB-A-9 625 87 (E.I. DU PONT DE NEMOURS)<br>* Page 2, lines 15-26; page 2, lines 40-54; page 2, lines 86-113; page 4, lines 1-13; claim 1 *<br>— — — | 1 | |
| P,X | EP-A-0 387 711 (DAIKIN IND.)<br>* Abstract; page 2, line 51 - page 3, line 11; page 3, lines 19-26; page 3, line 45 - page 4, line 4; example 1; figures 1,2 *<br>— — — | 1 | |
| X | CA-A-8 532 72 (E.I. DU PONT DE NEMOURS)<br>* Page 2, lines 24-27; page 4, lines 3-10; page 4, lines 19-27; claim 6 *<br>— — — — — | 1 | |
| | | | TECHNICAL FIELDS SEARCHED (Int. Cl.5) |
| | | | C 08 J<br>C 08 L |

The present search report has been drawn up for all claims

| Place of search | Date of completion of search | Examiner |
|---|---|---|
| The Hague | 27 June 91 | GOERKE H.R. |

CATEGORY OF CITED DOCUMENTS

X : particularly relevant if taken alone
Y : particularly relevant if combined with another document of the same catagory
A : technological background
O : non-written disclosure
P : intermediate document
T : theory or principle underlying the invention

E : earlier patent document, but published on, or after the filing date
D : document cited in the application
L : document cited for other reasons

&: member of the same patent family, corresponding document